Europäisches Patentamt

European Patent Office

Office européen des brevets

(19)

(11) Veröffentlichungsnummer: **0 257 450 B1**

# EUROPÄISCHE PATENTSCHRIFT

(12)

(45) Veröffentlichungstag der Patentschrift: **24.07.91**

(51) Int. Cl.⁵: **C21C 5/52**, F27B 3/10

(21) Anmeldenummer: **87111666.1**

(22) Anmeldetag: **12.08.87**

(54) **Verfahren zum gesteigerten Energieeinbringen in Elektrolichtbogenöfen.**

(30) Priorität: **27.08.86 DE 3629055**

(43) Veröffentlichungstag der Anmeldung:
**02.03.88 Patentblatt 88/09**

(45) Bekanntmachung des Hinweises auf die
Patenterteilung:
**24.07.91 Patentblatt 91/30**

(84) Benannte Vertragsstaaten:
**AT BE DE ES FR GB IT SE**

(56) Entgegenhaltungen:
EP-A- 0 030 360          DE-A- 2 816 543
FR-A- 2 415 148          GB-A- 2 115 011
US-A- 2 909 422          US-A- 3 459 867

PATENT ABSTRACTS OF JAPAN, Band 8, Nr.
218 (C-245)[1655], 4. Oktober 1984; & JP-A-59
104 419 (DAIDO TOKUSHUKO K.K.)
16-06-1984

(73) Patentinhaber: **KLÖCKNER CRA PATENT
GMBH
Klöcknerstrasse 29
W-4100 Duisburg(DE)**

(72) Erfinder: **Brotzmann, Karl,Prof.
Dr.-Ing.,Dr.-Ing.E.h.
Fentschstrasse 6
W-8458 Sulzbach-Rosenberg(DE)**
Erfinder: **Fritz, Ernst, Dipl.-Ing.
Konrad-Mayer-Strasse 10
W-8458 Sulzbach-Rosenberg(DE)**

(74) Vertreter: **König, Reimar, Dr.-Ing. et al
Patentanwälte Dr.-Ing. Reimar König
Dipl.-Ing. Klaus Bergen Wilhelm-Tell-Strasse
14 Postfach 260162
W-4000 Düsseldorf 1(DE)**

## Beschreibung

Die Erfindung betrifft ein Verfahren zum gesteigerten Energieeinbringen und zur Einsparung von elektrischer Energie in Lichtbogenöfen für die Stahlerzeugung, bei dem zusätzlich zur elektrischen Energie durch im oberen Ofenbereich stationär angeordnete Aufblasvorrichtungen kohlenstoffhaltige Brennstoffe und Sauerstoff oder sauerstoffhaltige Gase in den Ofenraum oder in den Ofenraum und die Schmelze geblasen sowie mit Hilfe von unterhalb der Badoberfläche angeordneten Düsen weitere Gase eingeleitet werden.

Die Entwicklungen der Stahlerzeugung im Elektrolichtbogenofen sind nach der letzten Ölkrise durch Maßnahmen zur Einsparung von Elektroenergie und zur Verkürzung der Einschmelzzeit gekennzeichnet. So konnten zum Beispiel in Japan in der Zeit von 1973 bis 1983 im Durchschnitt von 146 Elektroöfen die Abstichfolgezeit von 2 Stunden 46 Minuten auf 1 Stunde 51 Minuten reduziert werden. Der Stromverbrauch ließ sich im gleichen Zeitraum von 543 auf 439 kWh pro Tonne vermindern. Der Elektrodenverbrauch ging von 5.1 auf 3.1 kg/t zurück.

Zur Beschleunigung des Schrotteinschmelzens wird Sauerstoff über selbstverzehrende Rohre oder Lanzen in Mengen bis 25 Nm$^3$/t auf den heißen Schrott geblasen. Das dabei gebildete Eisenoxyd wird durch Zugabe kleinerer Mengen Stückkokses oder Einblasen von Kohle, ebenfalls über selbstverzehrende Lanzen, nach dem Schrotteinschmelzen teilweise reduziert. Allerdings bleibt der Wärmegewinn bei dieser Umsetzung der relativ kleinen Mengen von Kohlenstoff zu CO gering.

Das Schrotteinschmelzen wird auch durch den Einsatz verschiedener Brennertypen, insbesondere Öl-Sauerstoff-Brennern, beschleunigt. Diese Brenner sind meistens unmittelbar oberhalb der Schmelze im unteren Bereich der Seitenwand des Ofens angeordnet.

Es hat in der Vergangenheit auch nicht an Bestrebungen gefehlt, den wirtschaftlich bedeutungsvollen Verbrauch von Graphitelektroden mit Hilfe von nichtdurchströmten oder mit Gas bzw. Gas/Feststoff-Suspensionen beaufschlagten Hohlelektroden zu verringern, bzw. auch andere Effekte, wie die Erniedrigung des Wasserstoffgehaltes im Stahl oder allgemein die Zugabe von Feststoffen, zu erzielen. Die US-Patentschrift 29 09 422 und die DE-Offenlegungsschrift 29 00 864 beschreiben entsprechende Verfahren. Der Grund, warum sich diese Einblastechnik über Hohlelektroden nicht durchgesetzt hat, ist u.a. darin zu sehen, daß die Verteilung der eingeblasenen Feststoffe in der Schmelze durch die fehlende Badbewegung unvollständig bleibt. Beim Einblasen von Brennstoffen ließen sich keine wirtschaftlich tragbaren Ergebnisse erreichen.

Bei anderen Prozeßvarianten erfaßt man heute das Abgas und nutzt es zum Schrottvorheizen außerhalb des Elektrolichtbogenofens in besonderen Vorheizkammern. Der heiße Schrott wird dann in den Elektrolichtbogenofen chargiert. Mit diesen bekannten Verbesserungen ließ sich die Abstichfolgezeit der Elektrolichtbogenöfen in Einzelfällen bis auf etwa 80 Minuten verkürzen.

Um moderne Stranggußanlagen kontinuierlich bedienen zu können und die Wärmeverluste des Ofens zu verringern, ist eine weitere Reduzierung der Abstichfolgezeit für den Elektrolichtbogenöfen-Betrieb wirtschaftlich ebenso bedeutungsvoll wie die Verminderung des Verbrauches an teurer elektrischer Energie beim Schrotteinschmelzen. In diese Richtung geht ein aus der britischen Patentschrift 2 115 011 bekanntes Verfahren, bei dem in einen Lichtbogenofen u.a. über Lanzen kohlenstoffhaltige Brennstoffe und Sauerstoff auf die Schrottschüttung bzw. die Schmelze sowie unterhalb der Badoberfläche durch Boden- oder Seitenwanddüsen ein Rührgas in die Schmelze eingeblasen wird. Das Aufblasen kann dabei mit Hilfe zweier Seite an Seite angeordneter Lanzen, und zwar je einer für Brennstoff und Sauerstoff, odor einer Doppelrohrlanze geschehen, während zum Einblasen des Rührgases im Zentrum des Ofenbodens angeordnete Düsen dienen können. Ein derartiges kombiniertes Blasen hat sich zwar an sich bewährt; das Energieeinbringen und die Schmelzleistung sind jedoch nach wie vor unbefriedigend, da die Verbrennung sowohl der aufgeblasenen Festbrennstoffe als auch des die Schmelze verlassenden Abgases bei weitem nicht ausreichend ist.

Der Erfindung liegt daher die Aufgabe zugrunde, ein Verfahren zu schaffen, das nicht nur zu einer weitestgehend vollständigen Verbrennung des die Schmelze verlassenden Abgases und der aufgeblasenen Festbrennstoffe führt, sondern gleichzeitig auch die Übertragung der Verbrennungswärme an die Schmelze gewährleistet.

Die Lösung dieser Aufgabe besteht darin, daß bei einem Verfahren der eingangs erwähnten Art erfindungsgemäß der Sauerstoff oder die sauerstoffhaltigen Gase als Freistrahlen nach unten und tangential in den Raum zwischen dem Elektrodenteilkreis und der Ofenwand in das Schrotthaufwerk und/ oder den Gasraum des Ofens eingeleitet werden, so daß durch die dabei entstehende intensive Gasströmung die Reaktionsgase der zugeführten und aus dem Schrott stammenden Brennstoffe mehrfach in die Aufblasfreistrahlen eingesaugt und dabei verbrannt werden und die durch diese Reaktionsgasverbrennung freiwerdende Wärme mit einem wärmetechnischen Wirkungsgrad von mindestens 70 % an den Schrott und/oder die

2

Schmelze übertragen wird, und daß die weiteren Gase in den Bereichen, in denen die Aufblasstrahlen auf die Schmelze treffen, eingeblasen werden.

Bei dem erfindungsgemäßen Verfahren werden die aus den Verunreinigungen des Schrotts und vor allem den zugeführten kohlenstoffhaltigen Brennstoffen, wie Kohle oder Koks, stammenden zirkulierenden Reaktionsgase in die Freistrahlen der Aufblasvorrichtungen mehrfach eingesaugt und dabei weitgehend verbrannt. Die durch diese Reaktionsgasverbrennung freiwerdende Wärme wird mit einem wärmetechnischen Wirkungsgrad von 70 bis 90 % an den Schrott und/oder die Schmelze mit mindestens örtlich intensivierter Badbewegung übertragen. Dadurch steigt die Temperatur des der Abgasreinigung zugeführten Abgases nur unwesentlich über die Ofenraumtemperatur an. Der Verbrauch an Sauerstoff und Brennstoff zur Einsparung von elektrischer Energie ist wegen der guten Wärmeübertragung und der weitgehenden Verbrennung der Reaktionsgase zu $CO_2$ und $H_2O$ sowie der Verbrennung von im Schrott mitgeführten, kohlenwasserstoffenthaltenden Verschmutzungen, wie beispielsweise Lacke, Öle, Kunststoffe u.ä., gering.

Die Aufblasvorrichtungen sind gemäß der Erfindung bevorzugt im oberen Bereich der Ofenwand angeordnet. Dabei weisen die Längsachsen der Aufblasvorrichtungen tangential zu einem gedachten, stehenden Zylinder zwischen dem Elektrodenteilkreis und der Ofenwand nach unten in den Ofenraum. Der Durchmesser dieses gedachten, stehenden Zylinders liegt zwischen dem 0.5- bis 0. 8fachen des Ofeninnendurchmessers.

Bei der bekannten Betriebsweise von Elektrolichtbogenöfen würden die aus dem Schrott stammenden Reaktionsgase mit dem Abgas aus dem Ofen strömen, ohne daß diese Energie in einem größeren Umfang an den Schrott oder die Schmelze übertragen wird. Gemäß der Erfindung ergibt sich durch das Verbrennen der dem Schrott anhaftenden Verunreinigungen bereits ein erhöhtes Energie-einbringen.

Nach einem weiteren Merkmal der Erfindung heizen die Gasstrahlen aus den Aufblasvorrichtungen besonders die relativ kälteren Bereiche des Ofens, die sogenannten "Cold Spots", und den sich dort befindenden Schrott auf, wodurch das Schrotteinschmelzen zusätzlich beschleunigt wird.

Für den Betrieb mit Sauerstoff werden die einzelnen Austrittsöffnungen, d.h. die Düsen, der Aufblasvorrichtungen nach der folgenden Formel ausgelegt:

$$ D = 0.3 \text{ bis } 0.9 \sqrt{\frac{G}{Z \cdot n}} $$

Darin bedeuten:

$D \mathrel{\widehat{=}}$      Nennweite der Düse (cm)
$G \mathrel{\widehat{=}}$      Flüssigstahlgewicht (t/Charge)
$Z \mathrel{\widehat{=}}$      Anzahl der Düsen pro Aufblasvorrichtung
$n \mathrel{\widehat{=}}$      Anzahl der Aufblasvorrichtungen pro Ofen

Grundsätzlich können bei der Durchführung des erfindingsgemäßen Verfahrens beliebige Sauerstoffaufblasvorrichtungen, von einfachen Rohren bis zu wassergekühlten Lanzen, eingesetzt werden. Erfindungsgemäß haben sich jedoch Sauerstoffaufblasvorrichtungen mit mehreren Austrittsöffnungen, auch Düsen genannt, besonders bewährt. Diese Aufblasvorrichtungen haben keine Wasserkühlung und können beispielsweise aus Kupfer gefertigt sein. Sie haben eine bis sechs Austrittsöffnungen, vorzugsweise verfügen sie über vier Düsen. Der Gasvordruck an den Sauerstoffaufblasvorrichtungen ist so eingestellt, daß die Gasstrahlen normalerweise mit Schall-geschwindigkeit austreten. Es können aber auch Düsen mit konisch erweiterten Austrittsöffnungen zum Einsatz kommen, die überkritische Strömungsgeschwindigkeiten erlauben.

Es liegt im Sinne der Erfindung, die Blasraten für die sauerstoffhaltigen Gase an den Aufblasvorrichtungen während des Betriebes zu variieren, beispielweise sie in Relation zur Abgasanalyse und/oder der Brennstoffzufuhr zu regeln.

Gemäß der Erfindung erweist es sich als besonders vorteilhaft, vorgewärmte Luft von etwa 700 bis 1300° C, insbesondere etwa 900 bis 1200° C, für den Betrieb der Aufblasdüsen einzusetzen. Überraschenderweise kann mit zunehmender Temperatur im Ofenraum der Nachverbrennungsgrad, und damit das Energieeinbringen in den Elektrolichtbogenofenprozeß, durch Heißwind anstelle von Sauerstoff gesteigert werden. Es läßt sich weiterhin durch den Einsatz von Heißwind der thermische Wirkungsgrad, d.h. die Rückübertragung der aus der Nachverbrennung gewonnenen Wärme an den Schrott und/oder die Schmelze, steigern.

Bei dem Betrieb der Aufblasvorrichtungen und der gleichzeitigen Zuführung von kohlenstoffhaltigen Brennstoffen, sinkt mit fortschreitender Schrotteinschmelzzeit der wärmetechnische Wirkungsgrad bei der

3

Rückübertragung der aus der Reaktionsgasnachverbrennung gewonnenen Wärme. Gemäß einem wesentlichen Merkmal der vorliegenden Erfindung konnte dieser Verringerung des Energieeinbringens durch eine Intensivierung der Badbewegung begegnet werden. Dabei hat es sich erfindungsgemäß als besonders vorteilhaft herausgestellt, den Sauerstoff durch im Boden des Elektrolichtbogenofens angeordnete Düsen der Schmelze in den Bereichen zuzuführen, in denen die heißen Aufblasstrahlen auf die Oberfläche der Schmelze treffen. Es kann sich durch das Einleiten von Sauerstoff CO in der Schmelze bilden und an den Stellen entweichen, an denen die weitgehende Verbrennung zu $CO_2$ und die Wärmerückübertragung am besten sind.

Die Gasdurchflußmenge für die Düsen unterhalb der Badoberfläche kann verändert werden. Erfindungsgemäß wird vorteilhafterweise mit ansteigender Menge der Eisenschmelze im Elektrolichtbogenofen die Gasmenge verringert. Wenn der gesamte Schrott eingeschmolzen ist, beträgt die Sauerstoffblasrate ungefähr 2/$Nm^3$/min pro Düse oder weniger.

Diese Düsen unterhalb der Badoberfläche betreibt man normalerweise mit dem üblichen Sauerstoffvordruck von 5 bis 10 bar und maximal 20 bar. Es liegt jedoch im Sinne der Erfindung, auch mit erhöhtem Druck bis zu 60 bar zu arbeiten.

Erfindungsgemäß werden zweckmäßigerweise kohlenstoffenthaltende Brennstoffe über eine oder mehrere Hohlelektroden auf die Schmelze geblasen, und die mit Sauerstoff betriebenen Düsen unterhalb der Badoberfläche tragen zur Verteilung des Kohlenstoffs und der Teilverbrennung zu CO in der Schmelze bei. Gemäß einem weiteren Merkmal der Erfindung lassen sich auf diese Weise sehr große Brennstoffmengen pro Zeiteinheit und Elektrode der Schmelze zuführen und entsprechend umsetzen.

Das Einleiten von oxidierenden Gasen oder Inertgas sowie von Flüssigkeiten, wie beispielsweise Öl, durch die bekannten Düsen aus zwei konzentrischen Rohren erwies sich mit bekannter Technik als problematisch. Es traten beispielsweise problematische Spritzer durch im Boden oder in der unteren Seitenwand eingebaute Düsen auf, welche in dem oberen Bereich der Seitenwand des Ofens zu großen Ansatzbildungen aus Stahl führten. Erst eine deutliche Reduzierung der eingeleiteten Gasmengen, Anpassen der Düsenvordrucke an den Zustand der Schmelze, Optimierung der Düsenposition und weitere Reduzierung der Gasmengen auf ein Minimum, wenn der Schrott weitgehend geschmolzen ist, führte zu einer befriedigenden Lösung. Erfindungsgemäß werden bevorzugt Düsen mit einer Nennweite von nur 3 bis 8 mm eingesetzt. Bevorzugt verwendet man Doppelrohrdüsen, die im Zentralrohr mit Sauerstoff und im Ringspalt mit gasförmigen Kohlenwasserstoffen und/oder Inertgas bzw. Mischungen davon betrieben werden. Es kann auch Öl, wie beispielsweise leichtes Heizöl, zum Düsenschutz Verwendung finden.

Es liegt im Sinne der Erfindung, das innere Düsenrohr zu verschließen, beispielsweise mit einem feuerfesten Material zu stopfen, und nur durch den Ringspalt Gase, wie beispielsweise Inertgas, Stickstoff, gasförmige Kohlenwasserstoffe, wie Erdgas, Butan oder Propan, CO, $CO_2$ und beliebige Mischungen davon, in die Schmelze zu leiten. Auch die Zufuhr von Flüssigkeiten, wie beispielsweise Öl, durch den Ringspalt erweist sich als günstig. Gemäß der Erfindung können Altöle auf diese Weise als Brennstoff eingesetzt werden, insbesondere solange das Schrotthaufwerk im Ofen das unkontrollierte Austragen von Metalltropfen verhindert.

Gemäß der Erfindung können kohlenstoffhaltige Brennstoffe, hauptsächlich Kohle und Koks, zusammen mit dem Schrott in den Elektrolichtbogenofen chargiert werden. Erfindungsgemäß erweist es sich jedoch als vorteilhafter, die stückigen, kohlenstoffhaltigen Energieträger, wie Koks oder Kohle, vor die Sauerstoffeinleitungsdüsen auf den Herd des Elektrolichtbogenofens zu chargieren.

Gemäß der Erfindung besteht die bevorzugte Zugabeform der kohlenstoffhaltigen Brennstoffe jedoch darin, sie in gemahlener Form über eine oder mehrere, verschleißfest ausgekleidete Hohlelektroden mit hoher Geschwindigkeit direkt in die Schmelze und/oder den Schrott zu blasen. Durch das Aufblasen der kohlenstoffhaltigen Brennstoffe wird gleichzeitig das Schäumen der Schlacke und das Heizen mit relativ hoher elektrischer Spannung, d.h. langen und stabilen Lichtbögen, begünstigt. Diese relativ langen Lichtbögen und das Schäumen der Schlacke verkleinern die Strahlungsbelastung der Ofenwände und vermindern somit den Verschleiß. Weiterhin liegt der Abbrand der Hohlelektroden um ca. 30 % niedriger als bei vergleichbaren ungebohrten und nicht für die Feststoffzufuhr vorbereiteten Elektroden.

Gemäß der Erfindung können weitere Einsparungen an elektrischer Energie und eine Verkürzung der Chargenzeit erreicht werden, wenn gemahlene Kohle oder Öl zusätzlich durch die Aufblasvorrichtungen auf den oberflächlich angeschmolzenen Schrott oder die Schmelze aufgeblasen werden. Ein Abkühlen der vom Kohlestrom beaufschlagten Schrottoberflächen ist durch gleichzeitiges Blasen mit Sauerstoff oder vorgeheizter Luft zu vermeiden. Der Sauerstoff oder die Luft können den Kohlestrom beim Verlassen der Aufblasvorrichtung ummanteln, oder Kohle- und Gasstrom werden neben-einander so angeordnet, daß sie sich nach kurzer Laufstrecke kreuzen. Für das Aufblasen von Kohle auf oberflächlich verflüssigten Schrott eignet sich besonders feinkörnige Kohle von z.B. 90 % kleiner 0.5 mm. Für das Aufblasen von Kohle auf die Schmelze mit )Freistrahlen aus den im oberen Ofenbereich angeordneten Aufblasvorrichtungen verwendet man eine gröbere Körnung bis z.B. maximal 4 mm.

Gemäß der Erfindung kann auch Kohle, insbesondere Kohle mit hohen flüchtigen Bestandteilen, durch die Düsen unterhalb der Badoberfläche der Schmelze zugeführt werden. Dabei erweist es sich als günstig, wenn den mit Kohle- und/oder Kokspulver beaufschlagten Düsen mindestens eine Sauerstoffdüse zugeordnet wird, so daß die Schmelze beim Einleiten des kohlenstoffenthaltenden Brennstoffs örtlich nicht abkühlt. Erfindungsgemäß besteht jedoch die bevorzugte Zufuhr kohlenstoffhaltiger Brennstoffe durch eine oder mehrere Hohlelektroden, da die Lichtbögen bei dieser Zugabetechnik die Wärmezufuhr an den Zugabestellen für die Kohle erhöhen.

Gemäß der Erfindung können durch die Hohlelektrode weitere Feststoffe, beispielsweise Schlackenbildner, wie Kalk, Flußspat u.ä., in vorteilhafter Weise der örtlich überhitzten Schmelze zugeführt werden. Erfindungsgemäß können auf gleiche Weise Eisen- und/oder eisenoxydenthaltende Stoffe, Erze und vorreduzierte Erze des Eisens oder Legierungsmittel, wie beispielsweise Mangan, Chrom, Nickel, Vanadium, getrockneter Klärschlamm, in die Schmelze geleitet werden.

Es liegt im Sinne der Erfindung, Stäube und Problemstoffe in die Schmelze zu blasen, um beispielsweise Deponiekosten zu sparen. Weiterhin lassen sich mit dieser Methode auch wertvolle Metalle aus den Problemstoffen in der Schlacke oder der Schmelze anreichern. Weiterhin hat es sich bewährt, Altöl dem Kohlestrom auf dem Weg zur Hohlelektrode, z.B. direkt am Eingang zur Hohlelektrode, beizumischen und zur Steigerung des Wärmeeinbringens bei dem erfindinngsgemäßen Verfahren zu nutzen.

Gemäß der Erfindung hat sich die Zugabe von z.B. stückigen Brennstoffen mit einer Körnung von 5 bis 15 mm über ein Größere Bohrung in der Hohlelektrode mit Hilfe der Schwerkraft ähnlich gut bewährt wie das Einblasen der feinkörnigen Brennstoffe. Allerdings erlaubt die Zufuhr der pulverisierten Brennstoffe in Suspension mit einem Trägergas Bohrungen mit deutlich kleineren Nennweiten, so daß sich der Elektrodenquerschnitt nur um etwa 1% verkleinert. Als Fördergas für den Brennstoff wird für einfache Stahlqualitäten hauptsächlich Stickstoff verwendet, und der Förderdruck beträgt mindestens 2 bar, vorzugsweise 8 bis 20 bar. Als Fördergase können auch Edelgase, Erdgas, CO, $CO_2$, Luft oder Sauerstoff verwendet werden. Ein $Nm^3$ Fördergas wird mit etwa 10 bis 30 kg gemahlener Feststoffe, beispielsweise Kohle, beladen. Der Gasverbrauch ist erfindungsgemäß gering und kann weiter reduziert werden, wenn auf das Durchströmen der Hohlelektroden mit Gas während der feststoff-förderfreien Zeiten weitgehend oder ganz verzichtet wird.

Es hat sich als zweckmäßig erwiesen, die Zuleitungen zu den Aufblasvorrichtungen, den Hohlelektroden und Unterbaddüsen elektrisch zu isolieren.

Das erfindungsgemäße Verfahren setzt den Verbrauch an elektrischer Energie im Elektrolichtbogenofen bis fast zur Hälfte herab, erhöht gleichzeitig die Schmelzleistung und verkürzt damit die Abstichfolgezeit auf etwa eine Stunde. Die Abgase aus einem Elektrolichtbogenofen, der nach dem erfindinngsgemäßen Verfahren betrieben wird, sind nahezu vollverbrannt und lassen sich als Heizgas fast nicht mehr nutzen. Allerdings kann die physikalische Wärme der Abgase in entsprechenden Wärmeaustauschern beispielsweise zum Erhitzen der Aufblasluft oder zum Vorwärmen von Schrott genutzt werden.

Das Verfahren gemäß der Erfindung wird nachfolgend an Zeichnungen und nichteinschränkenden, algemeinen Beispielen näher erläutert.

Figur 1 zeigt den senkrechten Schnitt durch einen schematisch dargestellten Elektrolichbogenofen gemäß der Erfindung.

Figur 2 stellt den waagerechten Schnitt durch diesen Ofen dar.

Der Elektrolichtbogenofen weist in der feuerfesten Herdausmauerung 1 drei Düsen 2 aus jeweils zwei konzentrischen Rohren auf. In der oberen Seitenwand 3 befinden sich Aufblasvorrichtungen 4 mit jeweils vier Freistrahlen 5, die durch Pfeile angedeutet sind. Weiterhin ist die Hohlelektrode 6 mit der Bohrung 7 schematisch dargestellt. Die Linie 8 deutet die ruhende Badoberfläche vor dem Abstich an.

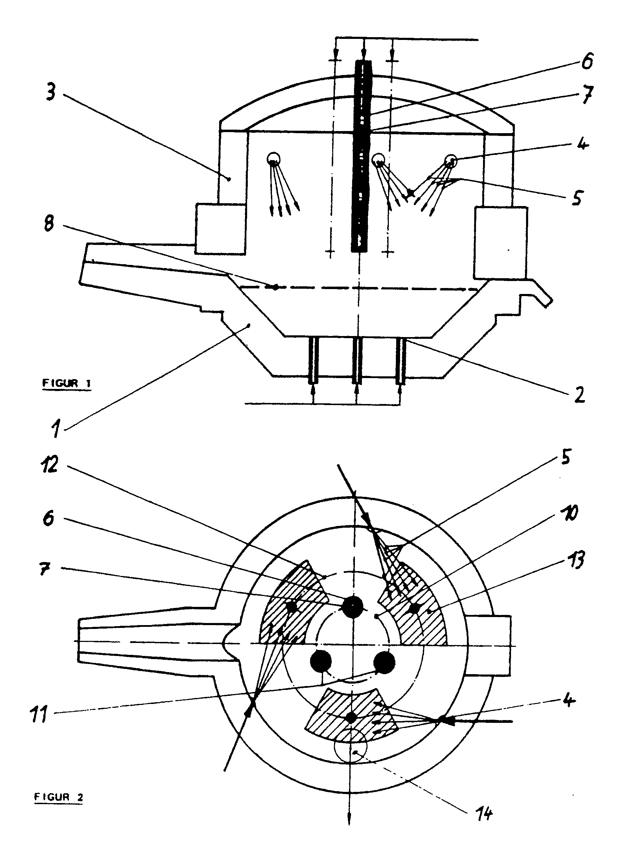

In der Figur 2 ist darüber hinaus der Elektrodenteilkreis 10 mit den darauf befindlichen Elektroden 11 und der Hohlelektrode 6 zu erkennen. Der gedachte, im Ofenraum stehende Zylinder ist durch die Linie 12 angedeutet, und die bevorzugten Auftreffflächen 13 für die Gasstrahlen 5 sind schraffiert dargestellt. Schließlich ist die Abgasöffnung 14 zu erkennen.

In einem 30 t-Lichtbogenofen mit 11 MW Nennleistung befinden sich drei Zweirohrdüsen 2, deren inneres Rohr mit feuerfester Masse gestopft ist, und durch den Ringspalt strömen pro Düse $0.7 \pm 0.3$ $Nm^3$ Inertgas und Propan. Am Blasende, etwa 4 min vor dem Abstich, schaltet man auf Argon um. In die Ofenwand 3 sind drei Aufblasvorrichtungen 4 für jeweils vier Freistrahlen 5, steil nach unten blasend, feststehend eingebaut. Durch diese hohe Position werden die Aufblasvorrichtungen 4 nicht vom Schrott beschädigt. Die Einblasmedien Sauerstoff und Kohle plus Stickstoff dienen gleichzeitig zur Kühlung der Aufblasvorrichtungen. Eine Wasserkühlung erwies sich als überflüssig. Pro Aufblasvorrichtung arbeiten drei Düsen nur mit Sauerstoff und eine Düse für die Kohle/Stickstoff-Suspension mit der Umschaltmöglichkeit auf Sauerstoff. Die Kohledüse ist mit einem Keramikrohr ausgekleidet und so in eine größere Sauerstoffdüse der Aufblasvorrichtung eingebaut, daß Sauerstoff aus einem Ringspalt den Kohlestrom ummantelt. Die Kohledüse wird nach dem Kohleblasen am Eingang zur Aufblasvorrichtung auf Stickstoff zum Kohleausspülen und danach auf Sauerstoff mit Hilfe eines Ventiles umgeschaltet. Die Sauerstoffblasrate beträgt beim Schrotteinschmelzen 9.5 Nm³/min pro Aufblasvorrichtung.

Insgesamt werden 2.0 t festes Roheisen, 26.1 t Kauf- und Schwerschrott, 2.6 t Pakete, 1.8 t Späne mit drei Körben in drei Portionen chargiert. Auf dem Ofenboden werden vor den Düsen 80 kg Stückkoks aufgegeben. Mit den Aufblasdüsen werden auf den zum Teil geschmolzenen Schrott und die Schmelze 400 kg gemahlener Anthrazit sowie 1270 Nm³ Sauerstoff aufgeblasen. 500 Nm³ Sauerstoff werden mit selbstverzehrenden Lanzen im Bereich der Schlackentüre zusätzlich eingeblasen. Der Stückkalkverbrauch liegt bei 1100 kg. Der Stromverbrauch beträgt einschließlich einer Reduktionsphase 10 200 kWh für 30 t Flüssigstahl mit 1640° C Abstichtemperatur. Der Elektrodenverbrauch beläuft sich auf 2.7 kg/t Flüssigstahl. In 49 Minuten, vom Stromeinschalten bis Abstichende, ist die Charge fertiggestellt.

Bei einer wirtschaftlich besonders bedeutungsvollen Variante des erfindungsgemäßen Verfahrens chargiert man in einen 30 t Lichtbogenofen auf drei Zweirohrdüsen 2, die eine Nennweite von 6 mm haben, 100 kg Stückkoks. Die Zweirohrdusen 2 werden mit jeweils 0.6 bis 4 Nm³O₂/min beaufschlagt und mit Kohlenwasserstoff bzw. Kohlenwasserstoff/Inertgas-Gemisch, in diesem Fall mit Erdgas, vor vorzeitigem Verschleiß geschützt. Angeordnet sind diese Düsen 70° zur Horizontalen in den Ebenen, die zwischen den Längsachsen der tangential blasenden Aufblasvorrichtungen und den Einblasdüsen 2 gebildet werden. Der größte Sauerstoffanteil wird über drei Aufblasvorrichtungen 4 mit jeweils drei kleineren und einer größeren Düse auf den Schrott und die Schmelze an den Stellen mit intensivierter Badbewegung aufgeblasen. Neben dem elektrischen Strom dient vor allem Anthrazit, der über eine Hohlelektrode in die Schmelze geblasen wird, als Energieträger. Einige Minuten, nachdem die Lichtbögen gezündet sind, wird mit dem Sauerstoffblasen und dem Aufblasen von kleinen Kohlemengen begonnen. Die Sauerstoffblasraten und die Kohlemengen erhöht man mit zunehmender Erhitzung und Schmelzung des Schrottes in jeder der drei Schmelzperioden. Der zeitliche Verlauf des Kohleeinblasens wird der Sauerstoffblasrate und der Abgasanalyse angepaßt.

Pro Charge mit 30 t Flüssigstahl verbraucht man etwa 27 t Kaufund Schwerschrott, 3.5 t Pakete und 2.0 t Späne. An Sauerstoff werden durch die Bodendüsen 450 Nm³, durch die Aufblasvorrichtungen 1600 Nm³ und durch die selbstverzehrenden Lanzen 600 Nm³ zur Verbrennung der Reaktionsgase auf den Schrott, die Schlacke und in den Ofenraum eingeleitet. Der Verbrauch an Anthrazit beträgt 1450 kg und an Kalk 1050 kg. Dem Anthrazit werden 300 kg E-Ofenstaub mit einem Zinkgehalt von 24 % zugemischt. Durch die nur einmalige Staubrückführung konnte der Zinkgehalt auf 32 % angereichert und einer Zinkgewinnung zugeführt werden. Auf die bodenblasenden Düsen chargiert man 100 kg Koks.

Bei einer Abstichtemperatur von 1630° C beträgt der Stromverbrauch, einschließlich einer Reduktionsphase, 7200 kWh. Der Elektrodenverbrauch liegt bei 3.2 kg/t Flüssigstahl. Die Zeit von Chargierbeginn bis Abstichende beträgt eine Stunde. Die Abstichfolgezeit kann noch weiter vermindert werden, wenn mit Restschmelze im Ofen gearbeitet wird bzw. die Zeit am Chargenende durch frühzeitiges Abstechen und Nutzung von Pfannenheizer und Sekundärmetallurgie verkürzt wird.

Zur Einsparung von Sauerstoff und zur Steigerung des Nachverbrennungsgrades, sowie zur besseren Wärmeübertragung, wird in einem 60 t-UHP-Ofen das erfindungsgemäße Verfahren ohne Anwendung von Sauerstoff zur Nachverbrennung durchgeführt. In den Schrott und auf Bereiche der Schmelze, die mit Hilfe der Bodendüsen eine Intensivierung der Badbewegung erfahren, wird auf 1100° C vorgeheizte Luft aufgeblasen. Im Ofenboden sind sechs Zweirohrdüsen mit einer Nennweite von 5 mm eingebaut, die in erster Linie mit Sauerstoff und Kohlenwasserstoffummantelung blasen. Der Heißwind wird durch sechs stationäre Aufblasorrichtungen tangential zu dem gedachten Zylinder, mit einem Durchmesser von 0.55 mal Ofendurchmesser, unter etwa 50° zur Horizontalen vom oberen Bereich der Ofenwand nach unten blasend in den Ofenraum eingeleitet. Der Druck in der Heißwindringleitung beträgt vor den Aufblasvorrichtungen 1.2 bar Überdruck. Kohle bläst man, wie in dem vorangegangenen Beispiel, über eine Hohlelektrode auf den aufschmelzenden Schrott und die Schmelze. In der Reduktionsphase werden Kohle und Kalkstaub kurzzeitig zur Einstellung des gewünschten Kohlenstoff- und Schwefelgehaltes im Stahl gezielt zur Aufkohlung und Entschwefelung bei niedrigem Elektrodenstand in die Schmelze geblasen.

Für 60 t Flüssigstahl benötigt man 54 t Kauf- und Schwerschrott, 6 t Pakete, 5 t Späne, 900 Nm³ Sauerstoff, welcher durch die Bodendüsen eingeblasen wird, 12 000 Nm³ Heißluft mit 1100° C, die über die Aufblasvorrichtungen in den Schrott, in den Ofenraum und auf die Schmelze gelangen, 800 Nm³ Sauerstoff durch selbstverzehrende Rohre, 2400 kg Kohle über zwei Hohlelektroden, 200 kg Stückkohle, die man auf den Herd des E-Ofens chargiert, 2000 kg Stückkalk und 13 920 kWh.

Mit Hilfe einer im Vergleich zur Sauerstoffzugabe voreilenden Kohlezugabe und der Möglichkeit, den Endkohlenstoffgehalt der Schmelze sowie die Schmelztemperatur genau einstellen zu können, läßt sich auch Roheisen aus Schrott und/oder anderen Eisenträgern wirtschaftlich erzeugen. Die Kombination Roheisenerzeugung und Aufarbeitung von Reststoffen durch deren Einblasen über die Hohlelektrode oder Aufblasvorrichtungen, ist im Einzelfall von großer Bedeutung. Die Zufuhr an Kohlenstoffträgern und oxidierenden Gasen kann so gesteuert werden, daß das Abgas noch einen hohen Anteil an CO und $H_2$ enthält und anderen Verwendungszwecken, wie z.B. Heizen, Vorreduzieren von Metalloxiden, zugeführt werden kann.

Es liegt im Sinne der Erfindung, die beschriebenen Merkmale beliebig zu kombinieren und den Betriebsbedingungen in den verschiedenen Elektrostahlwerken anzupassen.

## Patentansprüche

1. Verfahren zum gesteigerten Energieeinbringen und zur Einsparung von elektrischer Energie in Lichtbogenöfen für die Stahlherstellung, bei dem zusätzlich zur elektrischen Energie durch im oberen Ofenbereich stationär angeordnete Aufblasvorrichtungen kohlenstoffhaltige Brennstoffe und Sauerstoff oder sauerstoffhaltige Gase in den Ofenraum oder in den Ofenraum und die Schmelze geblasen sowie mit Hilfe von unterhalb der Badoberfläche angeordneten Düsen weitere Gase eingeleitet werden, dadurch gekennzeichnet, daß der Sauerstoff oder die sauerstoffhaltigen Gase als Freistrahlen nach unten und tangential in den Raum zwischen dem Elektrodenteilkreis und der Ofenwand in das Schrotthaufwerk und/oder den Gasraum des Ofens eingeleitet werden, so daß durch die dabei entstehende intensive Gasströmung die Reaktionsgase der zugeführten und aus dem Schrott stammenden Brennstoffe mehrfach in die Aufblasfreistrahlen eingesaugt und dabei verbrannt werden und die durch diese Reaktionsgasverbrennung freiwerdende Wärme mit einem wärmetechnischen Wirkungsgrad von mindestens 70% an den Schrott und/oder die Schmelze übertragen wird, und daß die weiteren Gase in den Bereichen, in denen die Aufblasstrahlen auf die Schmelze treffen, eingeblasen werden.

2. Verfahren nach Anspruch 1, dadurch gekennzeichnet, daß von oben mit vorgewärmter Luft geblasen wird.

3. Verfahren nach Anspruch 1 oder 2, dadurch gekennzeichnet, daß Feststoffe über eine oder mehrere Hohlelektroden auf die Schmelze geblasen werden.

4. Verfahren nach Anspruch 3, dadurch gekennzeichnet, daß die Feststoffe über verschleißfest ausgekleidete Hohlelektroden aufgeblasen werden.

5. Verfahren nach einem der Ansprüche 1 bis 4, dadurch gekennzeichnet, daß die Sauerstoffaufblasvorrichtungen eine bis sechs Austrittsöffnungen aufweisen und die Strömungsgeschwindigkeit der Gasstrahlen auf mindestens Schallgeschwindigkeit eingestellt wird.

6. Verfahren nach einem der Ansprüche 1 bis 5, dadurch gekennzeichnet, daß die Durchflußmengen der aus den Aufblasvorrichtungen strömenden sauerstoffhaltigen Gase gemäß der Abgasanalyse und/oder der Brennstoffzufuhr eingestellt werden.

7. Verfahren nach einem oder mehreren der Ansprüche 1 bis dadurch gekennzeichnet, daß die Gasdurchflußmenge für die Düsen unterhalb der Badoberfläche mit ansteigender Menge der Eisenschmelze im Ofen verringert wird, bis hin zu Blasraten von weniger als 2 $Nm^3$/min und Düse, wenn der gesamte Schrott eingeschmolzen ist.

8. Verfahren nach einem oder mehreren der Ansprüche 1 bis 7, dadurch gekennzeichnet, daß die Aufblasvorrichtungen mindestens zeitweise mit auf 700 bis 1300 °C vorgeheizter Luft betrieben werden.

9. Verfahren nach einem oder mehreren der Ansprüche 1 bis 8, dadurch gekennzeichnet, daß die einzelnen Austrittsöffnungen in den Aufblasvorrichtungen bei Sauerstoffbetrieb an der engsten Stelle eine Nennweite D, gemessen in cm, gemäß folgender Formel aufweisen:

$$D = 0.3 \text{ bis } 0.9 \sqrt{\frac{G}{Z \cdot n}},$$

wobei G das Gewicht des flüssigen Metalls in t, Z die Anzahl der Düsen je Einblasvorrichtung und n die Zahl der Aufblasvorrichtungen ist.

10. Verfahren nach einem oder mehreren der Ansprüche 1 bis 9, dadurch gekennzeichnet, daß in der oberen Ofenwand die Aufblasvorrichtungen so angeordnet sind, daß ihre Längsachsen tangential zu einem gedachten stehenden Zylinder weisen, dessen Durchmesser dem 0.5- bis 0.8-fachen des Ofeninnendurchmessers entspricht.

11. Verfahren nach einem oder mehreren der Ansprüche 1 bis 10, dadurch gekennzeichnet, daß die Längsachsen der Aufblasvorrichtungen in einem Winkel von 30 bis 60° zur Horizontalen nach unten geneigt sind.

12. Verfahren nach einem oder mehreren der Ansprüche 1 bis 11, dadurch gekennzeichnet, daß kohlenstoffhaltige Brennstoffe mit einer Körnung kleiner als 0.4 mm auf den Schrott und/ oder den angeschmolzenen Schrott und Brennstoffe mit einer gröberen Körnung bis maximal 4 mm auf die Schmelze geblasen werden.

13. Verfahren nach einem oder mehreren der Ansprüche 1 bis 12, dadurch gekennzeichnet, daß die Düsen unterhalb der Badoberfläche mit erhöhtem Druck bis zu 60 bar betrieben werden.

14. Verfahren nach einem oder mehreren der Ansprüche 1 bis 13, dadurch gekennzeichnet, daß aus zwei konzentrischen Rohren bestehende Düsen unterhalb der Badoberfläche beim Einleiten von Inertgas, Inertgas- Kohlenwasserstoff-Gemischen und/oder Öl im Zentralrohr mit einer feuerfesten Masse gestopft werden.

15. Verfahren nach einem oder mehreren der Ansprüche 1 bis 14, dadurch gekennzeichnet, daß durch eine oder mehrere Hohlelektroden kohlenstoffhaltige Brennstoffe, getrockneter Klärschlamm, Schlackenbildner, Erz, vorreduziertes Erz, Legierungsmittel, Reststoffe, Staube, Schlacken, Altöl, mit einem Trägergas einzeln oder in beliebigen Mischungen in die Schmelze eingeblasen werden.

16. Verfahren nach einem oder mehreren der Ansprüche 1 bis 15, dadurch gekennzeichnet, daß bei der Förderung der Feststoffe durch die Hohlelektrode ein Druck der Feststoff-Gas-Suspension von mindestens 2 bis 20 bar am Elektrodeneingang eingestellt wird.

17. Verfahren nach einem oder mehreren der Ansprüche 1 bis 16, dadurch gekennzeichnet, daß Roheisen oder Legierungen erschmolzen werden.

**Claims**

1. A process for increasing energy input and saving electrical energy in electric arc furnaces for steel production in which, in addition to the electrical energy, carbonaceous fuels and oxygen or oxygen-containing gases are blown into the furnace chamber or into the furnace chamber and the melt through stationary top blowing devices arranged in the upper region of the furnace and further gases are blown in by means of nozzles arranged beneath the surface of the bath, characterised in that the oxygen or oxygen-containing gases are introduced as free jets downwards and tangentially into the space between the electrode pitch circle and the furnace wall into the heap of scrap and/or the gas space of the furnace, so that the reaction gases from the fuel that is added or stems from the scrap are repeatedly sucked into the top blowing free jets by the resulting intensive gas flow and are thereby burned, the heat set free by this combustion of reaction gases is transferred to the scrap and/or the melt with a thermal efficiency of at least 70%, and that the further gases are introduced into the areas in which the top blowing jets impinge on the melt.

2. A process according to claim 1, characterised in that preheated air is blown in from the top.

3. A process according to claim 1 or claim 2, characterised in that solid materials are blown on to the melt through one or several hollow electrodes.

4. A process according to claim 3, characterised in that the solid materials are top blown via hollow electrodes with a wear-resistant coating.

5. A process according to any one of claims 1 to 4, characterised in that the oxygen top-blowing devices have one to six outlet openings and that the flow velocity of the gas jets is set at least at the speed of sound.

6. A process according to any one of claims 1 to 5, characterised in that the amounts of oxygen-containing gases flowing out of the top blowing devices are adjusted according to the off-gas analysis and/or the fuel supply.

7. A process according to any one or more of claims 1 to 6, characterised in that the gas flow through the nozzles beneath the bath surface is reduced as the amount of the iron melt in the furnace increases, down to blast rates less than 2 $Nm^3$/min. and per nozzle, when the whole of the scrap is molten.

8. A process according to any one or more of claims 1 to 7, characterised in that the top blowing devices are operated at least at times with air preheated to 700 to 1300 $^\circ$C.

9. A process according to any one or more of claims 1 to 8, characterised in that when operating with oxygen the individual outlet openings in the top-blowing devices have a nominal diameter D, measured in centimetres, at their narrowest point, according to the following formula:

$$D = 0.3 \text{ to } 0.9 \sqrt{G/(Z \cdot n)}$$

wherein G is the weight of liquid metal in t, Z is the number of nozzles per top blowing device and n is the number of top blowing devices.

10. A process according to any one or more of claims 1 to 9, characterised in that the top blowing devices are arranged in the upper furnace wall so that their longitudinal axes are tangential to an imaginary upright cylinder that has a diameter 0.5 to 0.8 times the internal diameter of the furnace.

11. A process according to any one or more of claims 1 to 10, characterised in that the longitudinal axes of the top blowing devices are inclined downwards at an angle of 30 to 60$^\circ$ to the horizontal.

12. A process according to any one or more of claims 1 to 11, characterised in that carbonaceous fuel having a particle size less than 0.4 mm, is blown on to the scrap and/or the melted scrap, and fuels with a coarser particle size up to a maximum of 4 mm are blown on to the melt.

13. A process according to any one or more of claims 1 to 12, characterised in that the nozzles beneath the surface of the bath are operated at elevated pressure up to 60 bar.

14. A process according to any one or more of claims 1 to 13, characterised in that nozzles beneath the surface of the bath, consisting of two concentric tubes, have their central tube stopped up with a refractory mass when introducing inert gas, inert gas/hydrocarbon mixtures and/or oil.

15. A process according to any one or more of claims 1 to 14, characterised in that carbonaceous fuels, dried sewage sludge, slag formers, ores, prereduced ores, alloying additions, residues, dusts, slags, old oil or any desired mixtures thereof are blown into the melt through one or more hollow electrodes with a carrier gas.

16. A process according to any one or more of claims 1 to 15, characterised in that in delivering the solid materials through the hollow electrodes a pressure of the solid-gas suspension of at least 2 to 20 bar is used at the inlet to the electrode.

17. A process according to any one or more of claims 1 to 16, characterised in that crude iron or alloys are melted.

**Revendications**

1. Procédé permettant d'augmenter l'apport d'énergie et d'économiser l'énergie électrique dans les fours à arc utilisés pour l'élaboration de l'acier, dans lequel, s'ajoutant à l'énergie électrique, des combustibles contenant du carbone et de l'oxygène ou des gaz contenant de l'oxygène sont soufflés dans le laboratoire du four ou dans le laboratoire du four et le bain par des dispositifs de soufflage montés à poste fixe dans la partie supérieure du four et dans lequel d'autres gas sont introduits par des tuyères situées au-dessous de la surface du bain, caractérisé en ce que l'oxygène ou les gaz contenant de l'oxygène sont introduits sous la forme de jets libres dirigés vers le bas et tangenteillement dans l'espace compris entre le cercle d'électrodes et la paroi du four dans la masse des ferrailles et/ou dans la zone des gaz du four de telle manière que les gaz de réaction des combustibles introduits et provenant des ferrailles sont aspirés à plusieurs reprises, par les remous intenses des gaz, dans les jets de soufflage libres et y sont brûlés et que la chaleur dégagée par cette combustion des gaz de réaction est transmise avec un rendement d'au moins 70% aux ferrailles et/ou au bain et en ce que les autres gaz sont soufflés dans les zones dans lesquelles les jets de soufflage arrivent sur le bain.

2. Procédé selon la revendication 1, caractérisé en ce que le soufflage s'effectue par le haut avec de l'air préchauffé.

3. Procédé selon l'une des revendications 1 ou 2, caractérisé en ce que les matières solides sont soufflées sur le bain par une ou plusieurs électrodes creuses.

4. Procédé selon la revendication 3, caractérisé en ce que les matières solides sont soufflées par des électrodes creuses munies d'un revêtement résistant à l'usure.

5. Procédé selon une des revendications 1 à 4, caractérisé en ce que les dispositifs de soufflage comportent d'un à six orifices de soufflage et que la vitesse d'écoulement des jets de gaz est réglée de manière à être au moins égale à la vitesse du son.

6. Procédé selon une des revendications 1 à 5, caractérisé-en ce que les débits des gaz contenant de l'oxygène sortant des dispositifs de soufflage sont réglés en fonction de l'analyse des fumées et/ou de l'alimentation en combustible.

7. Procédé selon une ou plusieurs des revendications 1 à 6, caractérisé en ce que le débit de gaz dans les tuyères situées au-dessous de la surface du bain est réduit à mesure qu'augmente la quantité de fer fondu dans le four, jusqu'à des taux de soufflage de moins de 2 $Nm^3$/min et par tuyère lorsque toute les ferrailles sont fondues.

8. Procédé selon une ou plusieurs des revendications 1 à 7, caractérisé en ce que les dispositifs de soufflage fonctionnent, au moins de temps en temps, avec de l'air préchauffé à une température de 700 à 1300°C.

9. Procédé selon une ou plusieurs des revendications 1 à 8, caractérisé en ce que les différents orifices de sortie ménagés dans les dispositifs de soufflage dans le cas de la marche à l'oxygène ont, à leur emplacement le plus étroit, une largeur nominale D qui s'exprime en cm par la formule suivante

$$D = 0,3 \text{ à } 0,9 \sqrt{\frac{G}{Z.n}}$$

: expression dans laquelle G désigne le poids en t. du métal liquide, Z,le nombre des tuyères dans chaque dispositif de soufflage et n, le nombre des dispositifs de soufflage

10. Procédé selon une ou plusieurs des revendications 1 à 9,caractérisé en ce que les dispositifs de soufflage sont montés dans la partie supérieure de la paroi du four de telle manière que leurs axes longitudinaux soient tangents à un cylindre imaginaire dont le diamètre est égal à 0,5 à 0,8 fois le diamètre intérieur du four.

11. Procédé selon une ou plusieurs des revendications 1 à 10; caractérisé en ce que les axes longitudinaux des dispositifs de soufflage sont inclinés vers le bas d'un angle de 30 à 60° par rapport à l'horizontale.

12. Procédé selon une ou plusieurs des revendications 1 à 11, caractérisé en ce que les combustibles contenant du carbone soufflés sur les ferrailles et/ou sur les ferrailles fondues ont une granulométrie inférieure à 0,4 mm et que les combustibles soufflés sur le bain ont une granulométrie plus forte ne dépassant pas 4 mm.

13. Procédé selon une ou plusieurs des revendications 1 à 12, caractérisé en ce que les tuyères situées au-dessous de la surface du bain fonctionnent sous une pression élevée pouvant atteindre 60 bars.

14. Procédé selon une ou plusieurs des revendications 1 à 13, caractérisé en ce que des tuyères constituées par deux tubes concentriques et situées au-dessous de la surface du bain comportent, dans le tube central, un bourrage constitué par une masse réfractaire en cas d'utilisation de gaz inerte, de mélanges de gaz inertes, d'hydrocarbures et/ou de mazout.

15. Procédé selon une ou plusieurs des revendications 1 à à 14, caractérisé en ce que, par une ou plusieurs électrodes creuses, des combustibles contenant du carbone, des boues de décantation séchées, des agents de scorification, du minerai préréduit, des éléments d'alliage, des résidus, des poussières, des scories, des huiles usées sont soufflés dans le bain au moyen d'un véhicule constitué par un gaz, individuellement ou en mélanges quelconques.

16. Procédé selon une plusieurs des revendications 1 à 15, caractérisé en ce que, pour le passage des matières solides dans l'électrode creuse, la pression de la suspension de matières solides dans le gaz est réglée à au moins 2 à 20 bars à l'entrée de l'électrode.

17. Procédé selon une plusieurs des revendications 1 à 16, caractérisé en ce qu'il comporte la fusion de fonte brute ou d'alliages.

FIGUR 1

FIGUR 2